# EUROPÄISCHE PATENTSCHRIFT

(11) **EP 3 121 424 B1**
(45) Veröffentlichungstag und Bekanntmachung des Hinweises auf die Patenterteilung: **10.07.2019**
(21) Anmeldenummer: 16001009.6
(22) Anmeldetag: 04.05.2016
(51) Int. Cl.: F02D 41/14, F02D 41/22, F01N 11/00

(54) **VERFAHREN ZUM BETREIBEN EINER ANTRIEBSEINRICHTUNG SOWIE ENTSPRECHENDE ANTRIEBSEINRICHTUNG**
METHOD FOR OPERATING A DRIVE DEVICE AND CORRESPONDING DRIVE DEVICE
PROCEDE D'ENTRAINEMENT D'UN DISPOSITIF D'ENTRAINEMENT ET DISPOSITIF D'ENTRAINEMENT CORRESPONDANT

(30) Priorität: 22.07.2015 DE 102015009489
(43) Veröffentlichungstag der Anmeldung: 25.01.2017
(73) Patentinhaber: AUDI AG, 85045 Ingolstadt (DE)
(72) Erfinder: Odendall, Bodo, DE - 85101 Lenting (DE)

(56) Entgegenhaltungen:
- DE-A1-102010 027 975
- DE-A1-102012 210 525
- DE-A1-102013 226 439
- JP-A- 2009 097 962
- JP-B2- 4 534 616
- US-A1- 2009 139 212
- US-A1- 2011 011 154
- US-A1- 2012 023 908

## Beschreibung

Die Erfindung betrifft ein Verfahren zum Betreiben einer Antriebseinrichtung, die über eine in einem Abgastrakt angeordnete Abgassonde verfügt, wobei die Abgassonde zumindest zeitweise mittels einer Sondenheizung beheizt und eine Sondentemperatur der Abgassonde gemessen wird. Die Erfindung betrifft weiterhin eine Antriebseinrichtung.

Die Antriebseinrichtung dient beispielsweise dem Bereitstellen eines Antriebsdrehmoments für ein Kraftfahrzeug, also eines auf das Antreiben des Kraftfahrzeugs gerichteten Drehmoments. Die Antriebseinrichtung weist beispielsweise eine Brennkraftmaschine auf, deren Abgas durch den Abgastrakt in Richtung einer Außenumgebung des Kraftfahrzeugs abgeführt wird. In dem Abgastrakt ist die Abgassonde vorgesehen, welche der Bestimmung beziehungsweise Messung wenigstens einer Abgaseigenschaft des den Abgastrakt durchströmenden Abgases dient. Vorzugsweise wird die Abgassonde von dem Abgas durchströmt oder überströmt. Beispielsweise liegt die Abgassonde in Form einer Lambdasonde vor, dient also der Ermittlung eines Restsauerstoffgehalts des Abgases.

Um die wenigstens eine Abgaseigenschaft mit Hilfe der Abgassonde mit hinreichender Genauigkeit ermitteln zu können, muss diese zunächst auf ihre Betriebstemperatur gebracht werden. Während dies selbstverständlich durch Wärmeübergang von dem Abgas auf die Abgassonde erfolgen kann, benötigt dieser Vorgang vergleichsweise viel Zeit. Ein schnelleres Aufheizen der Abgassonde kann mit Hilfe der Sondenheizung vorgenommen werden. So kann insbesondere bei einem Kaltstart der Antriebseinrichtung beziehungsweise der Brennkraftmaschine sichergestellt werden, dass zügig nach dem Kaltstart die Abgaseigenschaft mit hinreichend hoher Genauigkeit bestimmt werden kann. Das Heizen der Abgassonde mit Hilfe der Sondenheizung erfolgt vorzugsweise unmittelbar bei Betriebsbeginn der Antriebseinrichtung, insbesondere bei einem Starten der Brennkraftmaschine. Dieser Zeitpunkt kann als Heizbeginn bezeichnet werden.

Zum Überwachen des Aufheizens der Abgassonde, kann es vorgesehen sein, die Sondentemperatur der Abgassonde zu messen, beispielsweise mit Hilfe eines Temperatursensors. Der Temperatursensor liegt vorzugsweise an der Abgassonde vor. Beispielsweise ist er als separates Bauteil ausgestaltet, welches an der Abgassonde befestigt ist. Er kann jedoch auch in die Abgassonde integriert sein. Um die Abgassonde beziehungsweise die Sondenheizung zu überprüfen, kann es nun vorgesehen sein, nach Ablauf einer bestimmten Zeitspanne nach Heizbeginn die Sondentemperatur zu messen und mit einem Temperaturgrenzwert zu vergleichen. Unterschreitet die Sondentemperatur den Temperaturgrenzwert, so kann auf einen Defekt der Sondenheizung erkannt werden. Wenn jedoch die Abgassonde zu Heizbeginn bereits eine hohe Sondentemperatur aufweist, beispielsweise aufgrund einer hohen Umgebungstemperatur und/oder aufgrund einer kurzen Standzeit der Antriebseinrichtung, so kann es trotz defekter Sondenheizung vorkommen, dass die Sondentemperatur nach Ablauf der bestimmten Zeitspanne den Temperaturgrenzwert überschreitet und folglich auf eine funktionierende Sondenheizung erkannt wird, obwohl dies nicht zutreffend ist.

Aus dem Stand der Technik ist beispielsweise die Druckschrift DE 10 2007 035 188 A1 bekannt. Diese betrifft ein Verfahren zum Aufheizen eines Gassensors, insbesondere eines Abgassensors für eine Abgasanlage eines Kraftfahrzeugs, wobei eine Temperatur des Gassensors ermittelt wird, wobei abhängig von der Temperatur der Aufheizvorgang beeinflusst wird. Weiterhin ist aus dem Stand der Technik die Druckschrift US 2011/0011154 A1 bekannt. Diese beschreibt ein Verfahren zur Diagnose einer Abgassonde, wobei zur Fehlererkennung ein Temperaturkoeffizient der Abgassonde herangezogen wird. Die Druckschrift JP 2009-97962 A beschreibt eine Vorrichtung zur Fehlerdiagnose eines Sauerstoffsensors.

Es ist Aufgabe der Erfindung, ein Verfahren zum Betreiben einer Antriebseinrichtung vorzuschlagen, welches gegenüber bekannten Verfahren Vorteile aufweist, insbesondere ein zuverlässiges Erkennen eines Defekts der Sondenheizung ermöglicht.

Dies wird erfindungsgemäß mit einem Verfahren mit den Merkmalen des Anspruchs 1 erreicht. Dabei ist vorgesehen, dass während des Beheizens ein mit dem Temperaturzuwachs der Abgassonde korrespondierender Temperaturzuwachswert ermittelt und bei Abweichen des Temperaturzuwachswerts von einem Vorgabewert auf einen Defekt der Sondenheizung erkannt wird. Die Prüfung auf die Funktionsfähigkeit der Sondenheizung wird insoweit nicht oder zumindest nicht nur anhand der Sondentemperatur beziehungsweise eines Vergleichs der Sondentemperatur mit dem Temperaturgrenzwert vorgenommen. Vielmehr soll die Prüfung auf Grundlage des Temperaturzuwachswerts erfolgen, welcher den Temperaturzuwachs der Abgassonde charakterisiert.

Der Temperaturzuwachswert kann grundsätzlich beliebig definiert sein, solange er den Temperaturzuwachs der Abgassonde beschreibt, insbesondere in einem bestimmten Zeitpunkt oder innerhalb eines bestimmten Zeitraums. Erfindungsgemäß liegt er in Form eines Sondentemperaturgradients vor, welcher dem Gradienten der Sondentemperatur über der Zeit entspricht. Er kann jedoch auch in Form einer Zeitdauer vorliegen, welcher zwischen dem Erreichen zweier unterschiedlicher Temperaturwerte durch die Sondentemperatur vorliegt. Im einfachsten Fall ist es insoweit vorgesehen, zu Heizbeginn die momentane Sondentemperatur in Form eines ersten Temperaturwerts festzuhalten und nach Ablauf der bestimmten Zeitspanne nach Heizbeginn in Form eines zweiten Temperaturwerts. Nachfolgend kann die Differenz zwischen dem zweiten Temperaturwert und dem ersten Temperaturwert ermittelt werden. Ist diese Differenz größer als ein bestimmter Grenzwert, so wird von der Funktionsfähigkeit der Sondenheizung ausgegangen. Unterschreitet jedoch die Differenz den Grenzwert, so wird auf den Defekt der Sondenheizung erkannt.

Erfindungsgemäß ist vorgesehen, dass als Temperaturzuwachswert ein Sondentemperaturgradient verwendet und bei Unterschreiten des als Gradientengrenzwerts vorliegenden Vorgabewerts durch den Sondentemperaturgradient auf den Defekt der Sondenheizung erkannt wird. Erfindungsgemäß dient der Sondentemperaturgradient, also der Gradient der Sondentemperatur über der Zeit, als Temperaturzuwachswert. Als Vorgabewert kommt der Gradientengrenzwert zum Einsatz. Unterschreitet nun der Sondentemperaturgradient den Gradientengrenzwert, so wird davon ausgegangen, dass die Heizleistung der Sondenheizung nicht ausreichend ist. Mithin wird auf den Defekt der Sondenheizung erkannt. Anders ausgedrückt liegt also die Erfindung darin, dass während des Beheizens der Sondentemperaturgradient ermittelt und bei Unterschreiten des Gradientengrenzwerts durch den Sondentemperaturgradient auf den Defekt der Sondenheizung erkannt wird.

In einer weiteren Ausgestaltung der Erfindung ist vorgesehen, dass als Temperaturzuwachswert eine Zeitdauer zwischen dem Erreichen eines ersten Temperaturwerts und dem Erreichen eines zweiten Temperaturwerts durch die Sondentemperatur verwendet und bei Überschreiten des als Zeitgrenzwerts vorliegenden Vorgabewerts durch die Zeitdauer auf den Defekt der Sondenheizung erkannt wird. Die Zeitdauer beginnt, wenn die Sondentemperatur den ersten Temperaturwert erreicht beziehungsweise überschreitet. Sie endet, wenn die Sondentemperatur den zweiten Temperaturwert erreicht beziehungsweise überschreitet. Der zweite Temperaturwert ist dabei von dem ersten Temperaturwert verschieden, insbesondere ist er größer.

Ist die Zeitdauer zwischen den beiden Temperaturwerten zu lang, so wird darauf geschlossen, dass dies Sondenheizung defekt ist und mithin auf den Defekt der Sondenheizung erkannt. In dieser Ausführungsform dient die Zeitdauer als Temperaturzuwachswert und der Grenzwert als Vorgabewert. Insoweit ist die Erfindung darin zu sehen, dass während des Beheizens eine Zeitdauer zwischen dem Erreichen eines ersten Temperaturwerts und dem Erreichen eines zweiten Temperaturwerts durch die Sondentemperatur ermittelt und bei Überschreiten des Zeitgrenzwerts durch die Zeitdauer auf den Defekt der Sondenheizung erkannt wird.

Eine bevorzugte Ausgestaltung der Erfindung sieht vor, dass das Ermitteln des Sondentemperaturgradients bei Überschreiten eines Temperaturgrenzwerts durch die Sondentemperatur erfolgt. Der Sondentemperaturgradient, welcher mit dem Gradientengrenzwert verglichen wird, wirderst in oder nach einem Zeitpunkt ermittelt, in welchem die Sondentemperatur den Temperaturgrenzwert erreicht beziehungsweise ihn überschreitet.

Erfindungsgemäß ist vorgesehen, dass nach Ablauf der bestimmten Zeitspanne bei einem Unterschreiten des Temperaturgrenzwerts durch die Sondentemperatur auf den Defekt der Sondenheizung erkannt wird. Eine derartige Vorgehensweise ist zusätzlich zu der vorstehend beschriebenen vorgesehen.Als erstes Kriterium kommt die Abweichung des Temperaturzuwachswerts von dem Vorgabewert zum Einsatz, wobei hierbei gemäß den vorstehenden Ausführungen vorgegangen werden kann. Als zweites Kriterium wird nach Ablauf der bestimmten Zeitspanne geprüft, ob die Sondentemperatur den Temperaturgrenzwert unterschreitet. Es wird nun auf den Defekt der Sondenheizung erkannt, wenn lediglich eines der Kriterien erfüllt ist, also entweder das erste Kriterium oder das zweite Kriterium. Es kann nicht erfindungsgemäß auch vorgesehen sein, dass nur dann auf den Defekt der Sondenheizung erkannt wird, wenn beide Kriterien erfüllt sind, also sowohl der Temperaturzuwachswert von dem Vorgabewert abweicht als auch die Sondentemperatur nach Ablauf der bestimmten Zeitspanne den Temperaturgrenzwert unterschreitet.

Eine besonders vorteilhafte Ausgestaltung der Erfindung sieht vor, dass zum Ermitteln des Sondentemperaturgradients in einem ersten Zeitpunkt eine erste Sondentemperatur und in einem zweiten Zeitpunkt eine zweite Sondentemperatur gemessen wird. In dem ersten Zeitpunkt wird insoweit die momentane Sondentemperatur in Form der ersten Sondentemperatur und in dem zweiten Zeitpunkt in Form der zweiten Sondentemperatur festgehalten. Der zweite Zeitpunkt liegt dabei vorzugsweise nach dem ersten Zeitpunkt und ist von diesem verschieden. Beispielsweise wird nun der Sondentemperaturgradient ermittelt, indem die Differenz zwischen der zweiten Sondentemperatur und der ersten Sondentemperatur durch den Abstand der beiden Zeitpunkte dividiert wird. Selbstverständlich können auch andere Verfahren zum Ermitteln des Sondentemperaturgradients herangezogen werden, welche beispielsweise auf einer größeren Anzahl an Messpunkten beziehungsweise Sondentemperaturen aufbauen. Bei der hier beschriebenen Vorgehensweise sind der erste Zeitpunkt und der zweite Zeitpunkt beziehungsweise deren jeweiliger Abstand zu dem Heizbeginn vorzugsweise festgelegt, sodass die erste Sondentemperatur und die zweite Temperatur als Variablen vorliegen.

In einer bevorzugten weiteren Ausgestaltung der Erfindung ist vorgesehen, dass der Sondentemperaturgradient aus der Zeitdauer zwischen dem Erreichen des ersten Temperaturwerts und dem Erreichen des zweiten Temperaturwerts durch die Sondentemperatur ermittelt wird. Hierbei ist vorzugsweise die Zeitdauer variabel, während der erste Temperaturwert und der zweite Temperaturwert festgelegt sind. Es werden also diejenigen Zeitpunkte ermittelt, in welchen die Sondentemperatur den ersten Temperaturwert und den zweiten Temperaturwert erreicht beziehungsweise überschreitet. Aus der zwischen den Zeitpunkten vorliegenden Zeitdauer wird anschließend unter Heranziehung der beiden Temperaturwerte der Sondentemperaturgradient bestimmt.

Eine bevorzugt Ausgestaltung der Erfindung sieht vor, dass der erste Temperaturwert und der zweite Temperaturwert größer gewählt werden als eine zu Heizbeginn vorliegende Sondentemperatur. Auf diese Art und Weise werden die aussagekräftigsten Ergebnisse für den Temperaturzuwachswert, insbesondere den Sondentemperaturgradient erhalten. Selbstverständlich kann es auch vorgesehen sein, dass der erste Temperaturwert der zu Heizbeginn vorliegenden Sondentemperatur entspricht, während der zweite Temperaturwert größer ist.

Schließlich kann in einer weiteren Ausgestaltung der Erfindung vorgesehen sein, dass die Zeitspanne auf Grundlage der zu Heizbeginn vorliegenden Sondentemperatur bestimmt wird. Die Zeitspanne, nach welcher der Sondentemperaturgradient ermittelt wird oder geprüft wird, ob die Sondentemperatur den Temperaturgrenzwert unterschreitet, wird also in Abhängigkeit von der zu Heizbeginn vorliegenden Sondentemperatur ermittelt. Beispielsweise wird die Zeitspanne umso größer gewählt, je höher die Sondentemperatur ist, um möglichst aussagekräftige Messergebnisse zu erhalten.

Die Erfindung betrifft weiterhin eine Antriebseinrichtung, insbesondere zur Durchführung des vorstehend beschriebenen Verfahrens, mit den technischen Merkmalen gemäß Anspruch 1.
Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren können gemäß den vorstehenden Ausführungen weitergebildet sein, sodass insoweit auf diese verwiesen wird.

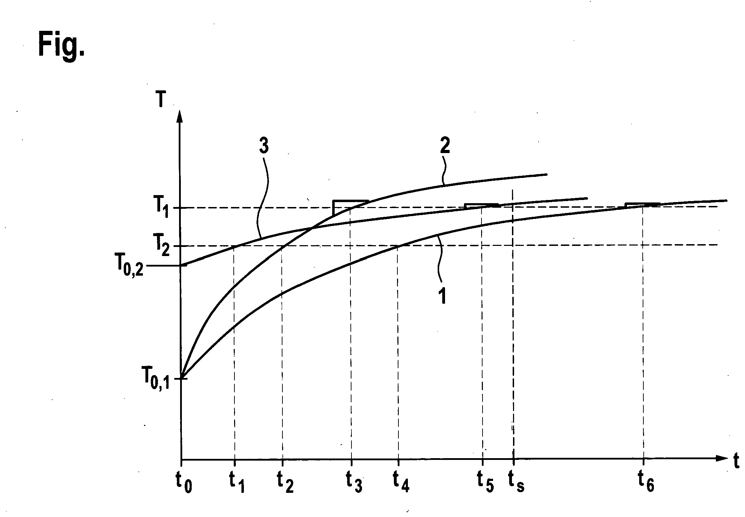

Die Erfindung wird nachfolgend anhand der in der Zeichnung dargestellten Ausführungsbeispiele näher erläutert. Dabei zeigt die einzige
- Figur: ein Diagramm, in welchem Verläufe einer Sondentemperatur über der Zeit aufgetragen sind.

Die Figur zeigt ein Diagramm, in welchem Verläufe 1, 2 und 3 wiedergegeben sind, welche jeweils eine Sondentemperatur T einer in einem Abgastrakt angeordneten Abgassonde über der Zeit t zeigen. Anhand der Verläufe 1, 2 und 3 sollen Verfahren zum Erkennen eines Defekts einer Sondenheizung der Abgassonde erläutert werden. Mit Hilfe der Sondenheizung kann die Abgassonde beheizt und mithin die Sondentemperatur T erhöht werden.

Beispielsweise kann zum Prüfen der Funktionsfähigkeit der Sondenheizung nach Ablauf einer bestimmten Zeitspanne nach Heizbeginn, welcher bei to vorliegt, auf das Überschreiten eines Temperaturgrenzwerts T₁ durch die Sondentemperatur T geprüft werden. Die bestimmte Zeitspanne endet beispielsweise zum Zeitpunkt t_{S}. Es wird deutlich, dass die Sondentemperatur T gemäß dem Verlauf 1 in dem Zeitpunkt t_{S} den Temperaturgrenzwert T₁ noch nicht erreicht hat. Entsprechend kann hier auf einen Defekt der Sondenheizung erkannt werden. Im Vergleich hierzu zeigt der Verlauf 2 die Sondentemperatur T bei einer funktionsfähigen Sondenheizung. Hier wird der Temperaturgrenzwert T₁ bereits zum Zeitpunkt t₃ erreicht und überschritten, sodass die Sondentemperatur T zum Zeitpunkt ts, also bei Ablauf der bestimmten Zeitspanne nach Heizbeginn, einen Wert aufweist, welcher den Temperaturgrenzwert T₁ deutlich überschreitet. Für die Verläufe 1 und 2 wird hierbei von einer Sondentemperatur zu Heizbeginn von T_{0,1} ausgegangen.

Liegt jedoch die Ausgangstemperatur höher, beispielsweise auf dem Wert T_{0,2}, wie dies für die Sondentemperatur gemäß dem Verlauf 3 der Fall ist, so kann es vorkommen, dass trotz defekter Sondenheizung nach Ablauf der bestimmten Zeitspanne, also im Zeitpunkt t_{S}, die Sondentemperatur T größer ist als der Temperaturgrenzwert T₁. Ausgehend von der höheren Ausgangstemperatur T_{0,2} erreicht die Sondentemperatur T gemäß dem Verlauf 3 bereits in dem Zeitpunkt t₅ und mithin vor dem Zeitpunkt t_{S} den Temperaturgrenzwert T₁.

Um zuverlässiger auf die Funktionsfähigkeit der Sondenheizung prüfen zu können, wird daher vorgeschlagen, dass während des Beheizens ein mit dem Temperaturzuwachs der Abgassonde korrespondierender Temperaturzuwachswert ermittelt wird. Weicht dieser von einem Vorgabewert ab, so wird auf den Defekt der Sondenheizung erkannt. Beispielsweise kommt als Temperaturzuwachswert ein Sondentemperaturgradient zum Einsatz, während der Vorgabewert in Form eines Gradientengrenzwerts vorliegt. Unterschreitet nun der Sondentemperaturgradient den Gradientengrenzwert, so soll auf den Defekt der Sondenheizung erkannt werden.

Beispielsweise wird der Sondentemperaturgradient ermittelt, wenn die Sondentemperatur T den Temperaturgrenzwert T₁ überschreitet. Dies ist für die Verläufe 1, 2 und 3 jeweils angedeutet. So erreicht die Sondentemperatur T den Temperaturgrenzwert T₁ im Falle des Verlaufs 1 erst im Zeitpunkt t₆ entsprechend wird erst in diesem Zeitpunkt der Sondentemperaturgradient ermittelt. Für die Sondentemperatur T gemäß Verlauf 2 ist dies bereits im Zeitpunkt t₃ der Fall, während der Sondentemperaturgradient für den Verlauf 3 im Zeitpunkt t₅ ermittelt wird. Bei Betrachtung der Verläufe 1, 2 und 3 wird deutlich, dass die Sondentemperaturgradienten gemäß den Verläufen 1 und 3 deutlich geringer sind als der Sondentemperaturgradient gemäß Verlauf 2. Entsprechend kann anhand der Größe des Sondentemperaturgradients auf die Funktionsfähigkeit der Sondenheizung geschlossen werden. Unterschreitet der Sondentemperaturgradient den Gradientengrenzwert, so wird auf den Defekt der Sondenheizung erkannt.

Zusätzlich oder alternativ kann als Temperaturzuwachs auch eine Zeitdauer verwendet werden, welche zwischen dem Erreichen eines ersten Temperaturwerts T₂ und dem Erreichen eines zweiten Temperaturwert T₁ durch die Sondentemperatur T vorliegt. Überschreitet die Zeitdauer einen Zeitgrenzwert, welcher als Vorgabewert verwendet wird, so soll auf den Defekt der Sondenheizung erkannt werden. Für den Verlauf 1 liegt die Zeitdauer zwischen den Zeitpunkten t₄ und t₆ vor, für den Verlauf 2 zwischen den Zeitpunkten t₂ und t₃ sowie für den Verlauf 3 zwischen den Zeitpunkten t₁ und t₅. Es wird deutlich, dass die Zeitdauer für den Verlauf 2 am kürzesten ist, während die Zeitdauern für die Verläufe 1 und 3 deutlich länger sind. Auch anhand der Zeitdauer kann insoweit zuverlässig auf die Funktionsfähigkeit der Sondenheizung geprüft werden.

Für alle Ausführungsformen des Verfahrens kann es selbstverständlich vorgesehen sein, dass nach Ablauf der bestimmten Zeitspanne, also beispielsweise im Zeitpunkt ts, die Sondentemperatur T mit dem Temperaturgrenzwert T₁ verglichen wird. Unterschreitet sie diesen, so kann auf den Defekt der Sondenheizung erkannt werden. Es kann vorgesehen sein, dass diese Bedingung zusätzlich zu den vorstehend erläuterten Kriterien erfüllt sein muss. Es kann jedoch auch vorgesehen sein, dass lediglich bei Erfüllung eines der Kriterien auf den Defekt der Sondenheizung erkannt wird. Mit Hilfe der beschriebenen Vorgehensweise ist eine besonders zuverlässige Funktionsprüfung der Sondenheizung der Abgassonde durchführbar.

## Patentansprüche

1. Verfahren zum Betreiben einer Antriebseinrichtung, die über eine in einem Abgastrakt angeordnete Abgassonde verfügt, wobei die Abgassonde zumindest zeitweise mittels einer Sondenheizung beheizt und eine Sondentemperatur (T) der Abgassonde mittels eines Temperatursensors gemessen wird, **dadurch gekennzeichnet, dass** nach Ablauf einer bestimmten Zeitspanne geprüft wird, ob die Sondentemperatur (T) einen Temperaturgrenzwert (T₁) unterschreitet, und bei Überschreiten des Temperaturgrenzwerts (T₁) durch die Sondentemperatur (T) ein Sondentemperaturgradient als mit dem Temperaturzuwachs der Abgassonde korrespondierender, den Temperaturzuwachs der Abgassonde beschreibender Temperaturzuwachswert ermittelt wird, wobei sowohl bei einem Unterschreiten des Temperaturgrenzwerts (T₁) durch die Sondentemperatur (T) als auch bei Unterschreiten von einem als Gradientengrenzwert vorliegenden Vorgabewert durch den Sondentemperaturgradient auf einen Defekt der Sondenheizung erkannt wird.

2. Verfahren nach Anspruch 1, **dadurch gekennzeichnet, dass** zum Ermitteln des Sondentemperaturgradients in einem ersten Zeitpunkt eine erste Sondentemperatur und in einem zweiten Zeitpunkt eine zweite Sondentemperatur gemessen wird.

3. Verfahren nach einem der vorhergehenden Ansprüche, **dadurch gekennzeichnet, dass** der Sondentemperaturgradienten aus einer Zeitdauer zwischen dem Erreichen eines ersten Temperaturwerts und dem Erreichen eines zweiten Temperaturwerts durch die Sondentemperatur (T) ermittelt wird.

4. Verfahren nach einem der vorhergehenden Ansprüche, **dadurch gekennzeichnet, dass** der erste Temperaturwert und der zweite Temperaturwert größer gewählt werden als eine zu Heizbeginn vorliegende Sondentemperatur (T_{0,1};T_{0,2}).

5. Verfahren nach einem der vorhergehenden Ansprüche, **dadurch gekennzeichnet, dass** die Zeitspanne auf Grundlage der zu Heizbeginn vorliegenden Sondentemperatur (T_{0,1};T_{0,2}) bestimmt wird.

6. Antriebseinrichtung zur Durchführung des Verfahrens nach einem oder mehreren der vorhergehenden Ansprüche, wobei die Antriebseinrichtung über eine in einem Abgastrakt angeordnete Abgassonde verfügt, und wobei die Abgassonde zumindest zeitweise mittels einer Sondenheizung beheizt und eine Sondentemperatur (T) der Abgassonde mittels eines Temperatursensors gemessen wird, **dadurch gekennzeichnet, dass** die Antriebseinrichtung dazu ausgebildet ist, nach Ablauf einer bestimmten Zeitspanne zu prüfen, ob die Sondentemperatur (T) einen Temperaturgrenzwert (T₁) unterschreitet, und bei Überschreiten des Temperaturgrenzwerts (T₁) durch die Sondentemperatur (T) einen Sondentemperaturgradient als mit dem Temperaturzuwachs der Abgassonde korrespondierenden, den Temperaturzuwachs der Abgassonde beschreibenden Temperaturzuwachswert zu ermitteln, wobei sowohl bei einem Unterschreiten des Temperaturgrenzwerts (T₁) durch die Sondentemperatur als auch bei Unterschreiten von einem als Gradientengrenzwert vorliegenden Vorgabewert durch den Sondentemperaturgradient auf einen Defekt der Sondenheizung erkannt wird.

## Claims

1. Method for operating a drive device, which has an exhaust probe disposed in an exhaust duct, wherein the exhaust probe is heated at least intermittently by means of a probe heater and a probe temperature (T) of the exhaust probe is measured by means of a temperature sensor, **characterised in that** after the expiration of a specific period of time it is checked whether the probe temperature (T) undershoots a temperature threshold value (T₁) and when the temperature threshold value (T₁) is exceeded by the probe temperature (T) a probe temperature gradient is determined as a temperature increase value corresponding with the temperature increase of the exhaust probe, describing the temperature increase of the exhaust probe, wherein both when the probe temperature (T) undershoots the temperature threshold value (T₁) and when the probe temperature gradient undershoots a predetermined value present as a gradient threshold value, a defect in the probe heating is recognised.

2. Method according to claim 1, **characterised in that** for determining the probe temperature gradient in a first point in time, a first probe temperature is measured, and in a second point in time a second probe temperature is measured.

3. Method according to any of the preceding claims, **characterised in that** the probe temperature gradient is determined from a time duration between the attaining of a first temperature value and the attaining of a second temperature value by the probe temperature (T).

4. Method according to any of the preceding claims, **characterised in that** the first temperature value and the second temperature value are selected greater than a probe temperature (T_{0,1};T_{0,2}) present at the start of heating.

5. Method according to any of the preceding claims, **characterised in that** the period of time is determined on the basis of the probe temperature (T_{0,1};T_{0,2}) present at the start of heating.

6. Drive device for carrying out the method according to one or more of the preceding claims, wherein the drive device has an exhaust probe disposed in an exhaust duct, and wherein the exhaust probe is heated at least intermittently by means of a probe heater and a probe temperature (T) of the exhaust probe is measured by means of a temperature sensor, **characterised in that** the drive device is configured after the expiration of a specific period of time to check whether the probe temperature (T) undershoots a temperature threshold value (T₁) and when the temperature threshold value (T₁) is exceeded by the probe temperature (T) to determine a probe temperature gradient as a temperature increase value corresponding with the temperature increase of the exhaust probe, describing the temperature increase of the exhaust probe, wherein both when the the probe temperature undershoots the temperature threshold value (T₁) and when the probe temperature gradient undershoots a predetermined value present as a gradient threshold value, a defect in the probe heating is recognised.

## Revendications

1. Procédé de fonctionnement d'un dispositif de propulsion, qui dispose d'une sonde de gaz d'échappement agencée dans un système de gaz d'échappement, dans lequel la sonde de gaz d'échappement est chauffée au moins temporairement au moyen d'un chauffage de sonde et une température de sonde (T) de la sonde de gaz d'échappement est mesurée au moyen d'un capteur de température, **caractérisé en ce que,** après l'expiration d'un laps de temps prédéterminé, on vérifie si la température de sonde (T) est inférieure à une valeur limite de température (T₁) et, si la température de sonde (T) est supérieure à la valeur limite de température (T₁), on détermine un gradient de température de sonde comme valeur d'accroissement de température correspondant à l'accroissement de température de la sonde de gaz d'échappement et décrivant l'accroissement de température de la sonde de gaz d'échappement, dans lequel, aussi bien lorsque la température de sonde (T) est inférieure à une valeur limite de température (T₁) que lorsque le gradient de température de sonde est inférieur à la valeur prescrite existant en tant que valeur limite de gradient, on déduit un défaut du chauffage de sonde.

2. Procédé selon la revendication 1, **caractérisé en ce que,** en vue de la détermination du gradient de température de sonde, une première température de sonde est mesurée à un premier instant et une deuxième température de sonde est mesurée à un deuxième instant.

3. Procédé selon l'une quelconque des revendications précédentes, **caractérisé en ce que** le gradient de température de sonde est déterminé à partir d'une durée entre le fait que la température de sonde (T) atteint une première valeur de température et le fait qu'elle atteint une deuxième valeur de température.

4. Procédé selon l'une quelconque des revendications précédentes, **caractérisé en ce que** la première valeur de température et la deuxième valeur de température sont choisies plus grandes qu'une température de sonde (T_{0,1}; T_{0,2}) régnant au début du chauffage.

5. Procédé selon l'une quelconque des revendications précédentes, **caractérisé en ce que** le laps de temps est déterminé sur la base de la température de sonde (T_{0,1}; T_{0,2}) régnant au début du chauffage.

6. Dispositif de propulsion pour la mise en oeuvre du procédé selon une ou plusieurs des revendications précédentes, dans lequel le dispositif de propulsion dispose d'une sonde de gaz d'échappement agencée dans un système de gaz d'échappement et dans lequel la sonde de gaz d'échappement est chauffée au moins temporairement au moyen d'un chauffage de sonde et une température de sonde (T) de la sonde de gaz d'échappement est mesurée au moyen d'un capteur de température, **caractérisé en ce que** le dispositif de propulsion est conçu pour vérifier, après l'expiration d'un laps de temps prédéterminé, si la température de sonde (T) est inférieure à une valeur limite de température (T₁) et, si la température de sonde (T) est supérieure à la valeur limite de température (T₁), pour déterminer un gradient de température de sonde comme valeur d'accroissement de température correspondant à l'accroissement de température de la sonde de gaz d'échappement et décrivant l'accroissement de température de la sonde de gaz d'échappement, dans lequel, aussi bien lorsque la température de sonde est inférieure à une valeur limite de température (T₁) que lorsque le gradient de température de sonde est inférieur à la valeur prescrite existant en tant que valeur limite de gradient, on déduit un défaut du chauffage de sonde.
